# EUROPÄISCHE PATENTSCHRIFT

(11) **EP 0 843 397 B1**
(45) Veröffentlichungstag und Bekanntmachung des Hinweises auf die Patenterteilung: **15.03.2006**
(21) Anmeldenummer: 97250334.6
(22) Anmeldetag: 11.11.1997
(51) Int. Cl.: H02J 7/02, B60L 3/00

(54) **Batterieladegerät**
Battery charger
Chargeur de batterie

(30) Priorität: 13.11.1996 DE 19646800
(43) Veröffentlichungstag der Anmeldung: 20.05.1998
(73) Patentinhaber: Bombardier Transportation GmbH, 13627 Berlin (DE)
(72) Erfinder: Dihlmann, Thomas, 13581 Berlin (DE)
(74) Vertreter: Thielmann, Andreas

(56) Entgegenhaltungen:
- EP-A- 0 622 883
- DD-A- 108 177

## Beschreibung

Die Erfindung bezieht sich auf eine Anordnung mit einem Batterieladegerät.

Bei einer Reihe von technischen Einrichtungen, die elektrische Verbraucher aufweisen, muß dafür Sorge getragen werden, daß die von einem Stromversorgungsnetz gespeisten Verbraucher bei Ausfall des Stromversorgungsnetzes von einer Batterie gespeist werden. Voraussetzung für die Versorgung der Verbraucher mit Energie zum Zeitpunkt des Netzausfalls ist, daß die Batterie geladen ist. Die Batterien werden deshalb an Batterieladegeräte angeschlossen, die vom gleichen Stromversorgungsnetz gespeist werden wie die elektrischen Verbraucher.

Besonders wichtig ist die Ausstattung von Fahrzeugen mit Batterien. Auch Schienenfahrzeuge weisen Batterien auf. Bei Schienenfahrzeugen schwankt die Netzspannung und damit die Versorgungsspannung häufig. Insbesondere bei Gleichspannungsnetzen in Schienenfahrzeugen sind Überspannungen unterschiedlicher Höhe und Dauer häufig bzw. nicht auszuschließen. Bei Gleichspannungsnetzen ist ein Gleichspannungs-Gleichspannungswandler als Batterieladegerät vorgesehen. Um Überspannungen in einem Zeitbereich von einigen 100 µs bis 5 ms vom Batterieladegerät fernzuhalten, ist dem Gleichspannungs-Gleichspannungswandler ein Eingangsfilter vorgeschaltet. Das Eingangsfilter entkoppelt überdies das Batterieladegerät vom Netz. Länger andauernde Überspannungen kann das Eingangsfilter nicht vom Batterieladegerät fernhalten. Um das Batterieladegerät vor den länger andauernden Überspannungen zu schützen, wird parallel zum Eingang des Batterieladegeräts ein pulsgesteuerter Widerstand geschaltet. Wenn die Spannung am Eingang des Batterieladegeräts einen bestimmten Grenzwert überschreitet, wird der pulsgesteuerte Widerstand eingeschaltet. Er besteht aus der Reihenschaltung eines kontaktlosen Schalters und eines Widerstands. Hierdurch wird insbesondere die Eingangsspannung am Batterieladegerät bei länger andauernder Überspannungen im Netz begrenzt.

Der pulsgesteuerte Widerstand ist an unterschiedliche Einsatzfälle bzw. Spannungen, Leistungen anpaßbar. Es kann daher ein einfach aufgebautes Batterieladegerät verwendet werden. Allerdings wird durch den pulsgesteuerten Widerstand der Aufwand größer. Der pulsgesteuerte Widerstand benötigt Raum und eine eigene Steuerung. Es muß dafür Sorge getragen werden, daß die Verlustwärme im Widerstand abgeführt wird. Weiterhin erhöhen der Widerstand und die Steuerung insbesondere das Gewicht von Fahrzeugen, wobei gerade bei Fahrzeulen Komponenten mit möglichst wenig Gewicht erwünscht sind.

Durch die EP 0 622 883 A2 ist eine Anordnung mit einem Batterieladegerät bekannt, das eine Ladegleichspannung an eine Batterie ausgibt und dem ein von einer Netzspannung beaufschlagtes Filter (mit nachgeschaltetem Gleichrichter und Hochsetzsteller) vorgeschaltet ist, wobei eine von einer Spannung am Batterieladegerät beaufschlagte Schaltung vorgesehen ist, die bei Überschreiten der Spannung über einen vorgegebenen Wert das Batterieladegerät zur Veränderung des Ladestroms veranlaßt. Die Veränderung des Stromes besteht dabei darin, daß er zu Null wird, weil das gesamte System abgeschaltet wird. Dieses ist aber zumindest bei kurzzeitigen Überspannungen nicht erforderlich.

Ferner ist durch die DD 108 177 eine Schaltungsanordnung zum Verhindern unerwünschter Überspannungen in autonomen Stromerzeugungsanlagen, insbesondere bei Schienenfahrzeugen bekannt, wobei ein steuerbarer Halbleitergleichrichter an die von Generator und Batterie abgeleitete Gleichspannung angeschlossen ist und bei Überspannung eine Belastung des Generators und die Sperrung der Felderregung auslöst. Zum Verhindern unerwünschter Überspannungen und zum Abbau von einer im Generator gespeicherten hohen Energie, die dann zu hohen Überspannungen beispielsweise bei Kurzschlüssen führt, wird dem Halbleitergleichrichter, welcher mittels eines Fühlkreises, bestehend aus mehreren Zenerdioden und einem Widerstand, gesteuert wird, die Spule eines Remanenzrelais nachgeschaltet. Dessen Kontakte trennen bei auftretender Überspannung und Durchsteuerung des Halbleitergleichrichters die Generatorfeldleitungen, entregen den Generator somit, schalten eine Zusatzlast zu und bereiten in Verbindung mit einer Taste einen Stromkreis zur Ummagnetisierung der Spule des Remanenzrelais vor.

Der Erfindung liegt das Problem zugrunde, ein Batterieladegerät zu entwickeln, mit dem auf einfache Weise auch bei über einige 100 ms andauernden Überspannungen des Netzes am Ladegeräteeingang die für eine einwandfreie Arbeitsweise des Ladegeräts erforderlichen Spannungen erzeugt werden können.

Der Lösung dieser Aufgabe dient erfindungsgemäß eine Anordnung mit einem Batterieladegerät, das eine Ladegleichspannung an eine Batterie ausgibt, dem ein von einer Netzspannung beaufschlagtes Filter vorgeschaltet ist und dem eine von der Eingangsspannung am Batterieladegerät beaufschlagte Schaltung zugeordnet ist, die bei Überschreiten der Eingangsspannung über einen vorgegebenen Wert das Batterieladegerät zur Abgabe eines höheren Ladestroms veranlaßt.

Der während der Dauer der Überspannung fließende höhere Ladestrom verursacht einen höheren Spannungsabfall am Filter, wodurch die Eingangsspannung am Batterieladegerät begrenzt wird. Das Filter wirkt hierbei als Transientenschutz für das Batterieladegerät und kann nur passive oder auch aktive Kompoenten enthalten. Mit der Erfindung wird eine Eigenschaft von Batterien ausgenutzt, die darin besteht, daß kurzzeitig ein höherer Ladestrom in die Batterie eingespeist werden kann, ohne diese in ihrer Funktion zu schädigen. Diesem Verhalten ist die kurzzeitige Entnahme eines höheren Stroms als der typische Dauerstrom aus der Batterie analog.

Das Batterieladegerät enthalt insbesondere einen getakteten Gleichspannungs-Gleichspannungswandler, dessen Ausgangsspannung oder Ladestrom in einem vorgegebenen Eingangsspannungsbereich auf einen gleichbleibenden Wert geregelt ist, und dessen Ausgangsspannung und/oder Ladestrom bei über die obere Grenze des Eingangsspannungsbereichs ansteigender Eingangsspannung so erhöht wird, daß die Eingangsspannung einen vorgegebenen weiteren Grenzwert nicht überschreitet, bedingt durch zusätzliche Energieabsortion. Insbesondere wird der Sollwert der Ausgangsgleichspannung oder des Ladestroms bei Überschreitung der vorgegebenen oberen Grenze des Eingangsspannungsbereichs erhöht.

Wenn Uberspannungen, die nicht bereits durch das Filter vom Batterieladegerät ferngehalten werden, nicht sehr häufig auftreten, müssen sie bei der thermischen Bemessung des Batterieladegeräts nicht berückrichtigt werden, d.h. die Baugröße des Batterieladegeräts wird durch die Möglichkeit des Abbaus länger andauernder Überspannungen nicht wesentlich beeinflußt.

Es sind lediglich die Betriebsmittel an den erhohten Ladestrom anzupassen. Durch die Begrenzung der Eingangsspannung werden die Komponenten des Batterieladegerats geschutzt. Insbesondere die Eingangskondensatoren des Gleichspannungs-Gleichspannungswandlers werden geschont, wodurch deren Brauchbarkeit erhoht wird

Bei dem oben beschriebenen Batterieladegerät ist die Netzspannung eine Gleichspannung.

Wenn die Netzspannung eine Wechselspannung ist, dann ist vorzugsweise das Filter eingangsseitig von der Wechselspannung beaufschlagt und ausgangsseitig mit einem Gleichrichter verbunden, dem das Batterieladegerat nachgeschaltet ist. Bei dieser Anordnung wird die Wechselspannung durch den Gleichrichter so umgewandelt, daß das Batterieladegerät mit Gleichspannung gespeist wird. Bei Überspannung des Wechselstromnetzes und einer Begrenzung der Eingangsgleichspannung am Batterieladegerat erzeugt der höhere Ladestrom den erforderlichen Spannungsabfall am Filter und dem Gleichrichter

Bei einer weiteren bevorzugten Ausführungsform ist einem von der Netzwechselspannung beaufschlagten Filter ein Gleichrichter nachgeschaltet, mit dem ein Hochsetzsteller verbunden ist, an den das Batterieladegerät angeschlossen ist, wobei der Hochsetzsteller so gesteuert wird, daß in das Filter ein nur geringe Oberwellen enthaltender Eingangsstrom bei einem Leistungsfaktor von nahe bei 1 eingespeist wird. Weiterhin gelangen praktisch keine Oberwellenströme ins Wechselspannungsnetz. Hochsetzsteller, die einen Leistungsfaktor von nahezu 1 bei möglichst sinusförmiger Spannung erzeugen sind an sich bekannt.

Bei einer weiteren bevorzugten Ausführungsform ist zwischen das von einem Wechselspannungsnetz gespeisten Filter und dem Batterieladegerät ein Zwei-Quadrantensteller angeordnet, der bei nahezu sinusförmiger Spannung einen Leistungsfaktor von etwa eins erzeugt. Bei dieser Ausführungsform wird ein gesonderter Gleichrichter eingespart.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen:
- Fig. 1: ein Blockschaltbild einer Anordnung mit einem von einem Gleichspannungsnetz gespeisten Batterieladegerät,
- Fig. 2: ein Blockschaltbild einer Anordnung mit einem von einer Wechselspannungsquelle gespeisten Batterieladegerät,
- Fig 3: ein Blockschaltbild einer weiteren Anordnung mit einem von einer Wechselspannungsquelle gespeisten Batterieladegerat,
- Fig 4: ein Blockschaltbild einer zusätzlichen Anordnung mit einem von einer Wechselspannungsquelle gespeisten Batterieladegerät.

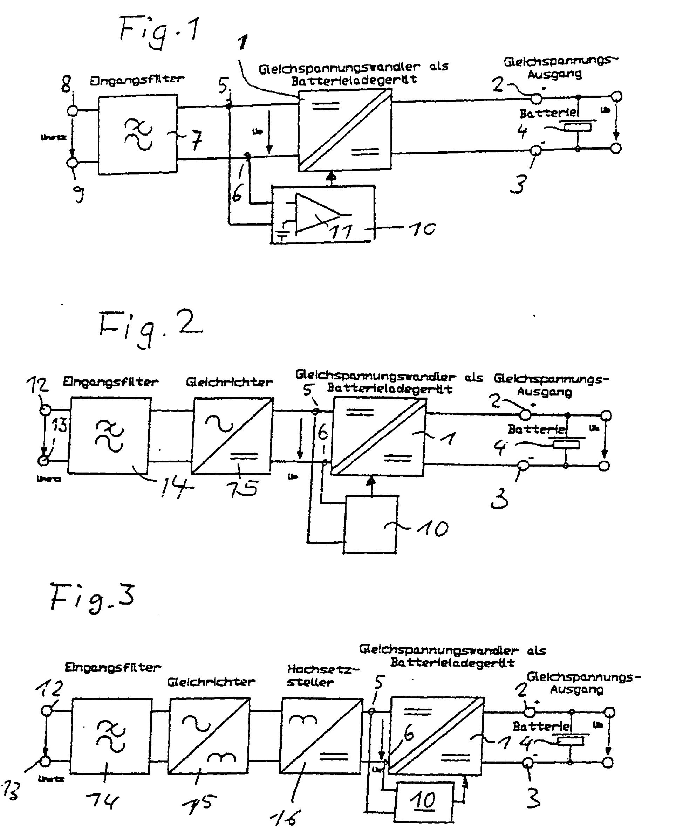

In Fig. 1 ist eine Anordnung mit einem Batterieladegerät 1 dargestellt, das einen an sich bekannten Gleichspannungs-Gleichspannungs-Wandler enthält, der als Schaltregler ausgebildet ist. An die Ausgänge 2, 3 des Gleichspannungs-Gleichspannungs-Wandler 1 ist eine Batterie 4 angeschlossen. Die Eingänge 5, 6 des Gleichspannungs-Gleichspannungs-Wandler 1 werden von einem Filter 7 gespeist, dessen Eingänge 8, 9 an ein Gleichspannungsnetz angeschlossen sind, das eine mit U_{Netz} bezeichnete Spannung hat. Die in Fig. 1 dargestellte Anordnung befindet sich z.B. in einem Schienenfahrzeug, wie einem Reisezugwagen Mit den Eingängen 5, 6 ist eine Schaltung 10 verbunden, mit der die Spannung U_{E} an den Eingangen 5, 6 auf Überschreiten eine oberen Grenzwerts überwacht wird. Hierfur ist beispielsweise ein Komparator 11 vorgesehen. Der Gleichspannungs-Gleichspannungs-Wandler 1 weist eine Regelung auf, wobei die Ausgangsspannung oder der Ausgangsstrom die Regelgröße ist Durch das Batterieladegerät 1 wird ein Ladestrom in die Batterie 4 eingespeist Bei Nennspannung des Gleichstromnetzes und einer im Toleranzbereich der Nennspannung liegenden Spannung arbeitet der Gleichspannungs-Gleichspannungs-Wandler 1 im Regelbetrieb, d.h. die Ausgangsspannung oder der Ausgangsstrom werden auf gleichbleibende Werte geregelt. Bei Eisenbahnfahrzeugen ist bei einer Nennspannung von 750 V der obere Grenzwert der Spannung, bei der die Regelung arbeitet z.B. 900 V. Die Schaltung 10 spricht bei einem oberen Grenzwert von 900 V oder einer höheren Spannung an und beeinflußt den Sollwert des geregelten Gleichspannungs-Gleichspannungs-Wandlers I. Der Sollwert des Stroms oder der Spannung wird erhöht, so daß in der Batterie 4 ein erhöhter Ladestrom fließt.

Die Sollwerterhöhung kann beispielsweise durch einen kontaktlosen Schalter erfolgen, über den dem Sollwert eine zusätzliche Spannung aufgeschaltet wird. Es ist auch möglich, den Sollwert nach Art einer Führungsgröße entsprechend der Spannung an den Eingängen zu erhöhen. Durch die Sollwerterhöhung und im Zusammenhang damit die Erhöhung des Ladestroms entsteht ein größerer Spannungsabfall am Eingangsfilter 7, wodurch die Spannung an den Eingängen 5, 6 begrenzt wird. Durch die Erhöhung des Ladestroms bei Überspannugen im Netz, die eine gewisse Höhe übersteigen, wird die Spannung am Batterieladegerät 1 auf unschädliche Werte begrenzt.

In Fig. 2 ist eine Ausführungsform dargestellt, die von einem Wechselspannungsnetz mit den Polen 12, 13 gespeist wird. Das Batterieladegerät und die Steuerung sind entsprechend der in Fig. 1 gezeigten Anordnung ausgebildet und mit den gleichen Bezugszeichen versehen.

Das Batterieladegerät speist die Batterie 4, deren Spannung in Fig 2 mit U_{b} bezeichnet ist.

An die Pole 12, 13 ist ein Filter 14 angeschlossen, das fur Wechselspannungen und -ströme ausgelegt ist. Zwischen den Ausgängen des Wechselspannungsfilters 14 und den Eingangen 5, 6 des Batterieladegeräts 1 ist ein Gleichrichter 15 angeordnet. Der Gleichrichter erzeugt aus der Netzwechselspannung die Betriebsgleichspannung für das Batterieladegerät 1 Bei einem erhöhten Ladestrom aufgrund einer Überspannung im Wechselstromnetz hangt die Spannung an den Eingängen von den Spannungsabfällen am Filter 14 und am Gleichrichter 15 ab. Im übrigen arbeitet die Anordnung gemäß Fig. 2 ebenso wie die in Fig 1 dargestellte Schaltung.

Die in Fig. 3 zeigt eine Anordnung, bei der das Batterieladegerät 1, die Steuerung 10 und die Batterie 4 gleich ausgebildet sind, wie bei den Anordnungen gemäß Fig. 1 und 2 und dementsprechend mit den gleichen Bezugszeichen versehen sind. Die Anordnung gemäß Fig 3 wird ebenso wie die Anordnung gemäß Fig. 2 von einem Wechselstromnetz mit Polen 12, 13 gespeist. In gleicher Weise wie bei der Anordnung gemäß Fig. 2 ist ein Filter 14 an die Pole 12, 13 angeschlossen, dem ein Gleichrichter 15 nachgeschaltet ist. Zwischen den Ausgängen des Gleichrichters 15 und den Eingängen 5, 6 des Batterieladegeräts 1 ist ein Gleichstrom-Hochsetzsteller 16 angeordnet. Der Gleichstrom-Hochsetzsteller 16 wird so gesteuert, daß der Eingangswechselstrom der Anordnung möglichst sinusförmig ist und der Leistungsfaktor nahe bei 1 liegt. Bei Überspannungen von unerwünschter Höhe im Wechselspannungsnetz wird durch den erhöhten Ladestrom im Filter 14, im Gleichrichter 15 und im Hochsetzsteller 16 ein Spannungsabfall hervorgerufen, durch den die Spannung an den Eingängen 5, 6 des Batterieladegeräts 1 auf unschädliche Werte begrenzt wird.

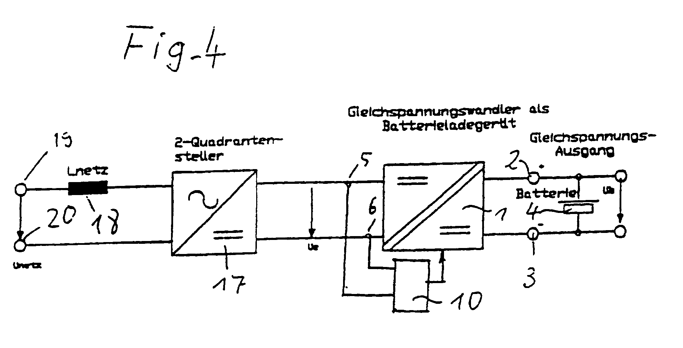

Bei der in Fig. 4 dargestellten Anordnung ist wie bei den oben beschriebenen Anordnungen das gleiche Batterieladegerät 1 mit der Steuerung 10 vorhanden. Den Eingängen 5, 6 ist ein 2-Quadrantensteller 17 vorgeschaltet, der eingangsseitig über eine Netzdrossel 18 als Filter an die Pole 19, 20 eines Wechselstromnetze gelegt ist. Der 2-Quadrantensteller wird so geschaltet, daß ein möglichst sinusförmiger Eingangsstrom und ein Leistungsfaktor nahe bei 1 erreicht wird. Die Betriebsweise eines 2-Quadrantenstellers zur Erreichung dieser Werte ist bekannt.

Die Schaltung 10 kann auch eine übergeordnete Regelung ausführen, die dafür sorgt, daß bei Überspannungen die Spannung an den Eingängen 5, 6 nicht über einen vorgegebenen Grenzwert ansteigen kann.

Die oben beschriebenen Batterieladeschaltungen eignen sich insbesondere für Schienenfahrzeuge wie S-Bahnen, U-Bahnen, Fernbahnen usw

## Patentansprüche

1. Anordnung mit einem Batterieladegerät (1),
- das eine Ladegleichspannung an eine Battene (4) ausgibt,
- dem ein von einer Netzspannung beaufschlagtes Filter (7, 14) vorgeschaltet ist
- und dem eine von der Eingangsspannung am Batterieladegerät (1) beaufschlagte Schaltung (10) zugeordnet ist, die bei Überschreiten der Eingangsspannung über einen vorgegebenen Wert das Batterieladegerät (1) zur Abgabe eines höheren Ladestroms veranlaßt.

2. Anordnung nach Anspruch 1,
**dadurch gekennzeichnet**
**daß** das Batterieladegerät (1) einen getakteten Gleichspannungs-Gleichspannungs.Wandler enthält, dessen Ausgangsspannung oder Ausgangsstrom in einem vorgegebenen Eingangsspannungsbereich auf einen gleichbleibenden Wert geregelt wird und dessen Ausgangsspannung und/oder Ausgangsstrom bei über die obere Grenze des Eingangsspannungsbereichs ansteigender Eingangsspannung so erhöht wird, daß die Eingangsspannung einen vorgegebenen zweiten Grenzwert nicht überschreitet.

3. Anordnung nach Anspruch 1 oder 2,
**dadurch gekennzeichnet,**
**daß** das Batterieladegerät (1) mit der Steuerung (10) eingangsseitig über einen Gleichrichter (15) und ein diesen vorgeschaltetes Filter (14) an ein Wechselspannungsnetz gelegt ist.

4. Anordnung nach einem oder mehreren der vorhergehenden Ansprüche,
**dadurch gekennzeichnet,**
**daß** das Batterieladegerät (1) mit der Steuerung (10) eingangsseitig über einen Gleichstrom-Hochsetzsteller (16), einen diesem vorgeschalteten Gleichrichter (15) und ein dem Gleichrichter (15) vorgeschaltetes Filter (14) an ein Wechselspannungsnetz gelegt ist.

5. Anordnung nach Anspruch 1 oder 2,
**dadurch gekennzeichnet,**
**daß** das Batterieladegerät (1) mit der Steuerung (10) über einen 2-Quadrantensteller (17) und ein diesem vorgeschaltetes Filter an ein Wechselstromnetz gelegt ist.

## Claims

1. Arrangement comprising a battery charger (1),
- which outputs a DC charging voltage to a battery (4),
- which has a filter (7, 14) connected upstream, said filter being fed a mains voltage,
- and which is assigned a circuit (10) which is fed the input voltage of the battery charger (1) and causes the battery charger (1) to output a higher charging current if the input voltage exceeds a predefined value.

2. Arrangement according to Claim 1, **characterized in that** the battery charger (1) contains a switch-mode DC/DC converter, the output voltage or output current of which is regulated to a constant value within a predefined input voltage range and the output voltage and/or output current of which is increased in the event of an input voltage rising above the upper limit of the input voltage range so that the input voltage does not exceed a predefined second limit value.

3. Arrangement according to Claim 1 or 2, **characterized in that** the battery charger (1) with the control system (10) is connected to an AC power supply at the input side via a rectifier (15) and a filter (14) connected upstream thereof.

4. Arrangement according to one or more of the preceding claims, **characterized in that** the battery charger (1) with the control system (10) is connected to an AC power supply at the input side via a DC boost converter (16), a rectifier (15) connected upstream thereof and a filter (14) connected upstream of said rectifier (15).

5. Arrangement according to Claim 1 or 2, **characterized in that** the battery charger (1) with the control system (10) is connected to an AC power supply via a 2-quadrant controller (17) and a filter connected upstream thereof.

## Revendications

1. Agencement comportant un chargeur de batterie (1),
- qui délivre une tension continue de chargement à une batterie (4),
- en amont duquel est installé un filtre (7, 14) sollicité par une tension réseau,
- et auquel est affecté un circuit (10) sollicité par la tension d'entrée au niveau du chargeur de batterie (1), lequel, lorsqu'on dépasse la tension d'entrée d'une valeur prédéfinie, conduit le chargeur de batterie (1) à délivrer un courant de chargement plus élevé.

2. Agencement selon la revendication 1, **caractérisé en ce que** le chargeur de batterie (1) contient un convertisseur tension continue /tension continue synchronisé, dont la tension de sortie ou le courant de sortie est régulé, dans une plage de tensions d'entrée prédéfinie, à une valeur constante, et dont la tension de sortie et / ou le courant de sortie est augmenté pour une tension d'entrée passant au-dessus de la limite supérieure de la plage de tensions d'entrée, de telle sorte que la tension d'entrée ne dépasse pas une deuxième valeur limite prédéfinie.

3. Agencement selon l'une quelconque des revendications 1 ou 2, **caractérisé en ce que** le chargeur de batterie (1), avec le dispositif de commande (10), est placé sur un réseau de tension alternative, du côté entrée, par l'intermédiaire d'un redresseur (15) et d'un filtre (14) installé en amont de celui-ci.

4. Agencement selon une ou plusieurs des revendications précédentes, **caractérisé en ce que** le chargeur de batterie (1), avec le dispositif de commande (10), est placé sur un réseau de tension alternative, du côté entrée par l'intermédiaire d'un dispositif élévateur de courant continu (16), d'un redresseur (15) installé en amont de celui-ci, et d'un filtre (14) installé en amont du redresseur (15).

5. Agencement selon l'une quelconque des revendications 1 ou 2, **caractérisé en ce que** le chargeur de batterie (1) avec le dispositif de commande (10) est placé sur un réseau de courant alternatif par l'intermédiaire d'un organe de réglage à 2 quadrants (17) et d'un filtre installé en amont de celui-ci.
